# DEMANDE DE BREVET EUROPEEN

(11) **EP 2 165 949 A1**
(43) Date de publication de la demande: **24.03.2010**
(21) Numéro de dépôt: 09305856.8
(22) Date de dépôt: 16.09.2009
(51) Int. Cl.: B65G 47/44, E01H 10/00

(54) **Dispositif d'épandage d'un produit de déneigement**

(30) Priorité: 17.09.2008 FR 0856247
(71) Demandeur: Acometis - Ateliers de Construction Métallique Industrielle de Soultz Société Anonyme, 68360 Soultz (FR)
(72) Inventeur: Aubert, Claude, F-68360 Soultz (FR)
(74) Mandataire: Rhein, Alain

(57) **Abrégé**

L'invention concerne un dispositif d'épandage (23) d'un produit de déneigement comportant un dispositif d'extraction (1) de ce produit de déneigement comportant :
- un moyen (2) pour stocker le produit ;
- un moyen (3) pour acheminer le produit hors du moyen (2) de stockage et présentant une zone (9) d'une partie aval (8) au niveau de laquelle ce produit quitte le moyen d'acheminement (3) ;
- à l'avant de cette zone (9), un moyen (10) pour conférer au produit à extraire et provenant du moyen d'acheminement (3), un écoulement dont le flux est homogène et continu.

Ce dispositif est **caractérisé en ce que** le moyen (10) pour conférer au produit un flux homogène et continu est constitué par une plaque (11) comportant :
- une première portion (13) située au débouché et orientée en direction du moyen d'acheminement (3) ;
- une seconde portion (14), située dans le prolongement de cette première portion (13), et pourvue d'une découpe (15) s'étendant sur une partie au moins de la longueur de cette seconde portion (14).

## Description

La présente invention a trait à un dispositif d'épandage d'un produit de déneigement comportant un dispositif d'extraction d'un tel produit de déneigement.

Cette invention concerne le domaine de la fabrication des équipements conçus pour assurer l'extraction d'un produit contenu dans un moyen de stockage, ceci en vue d'alimenter un moyen conçu pour délivrer ce produit.

Cette invention trouvera une application particulièrement appropriée mais aucunement limitative dans le domaine de l'épandage, sur une route, d'un produit de déneigement, notamment constitué par un sel de déneigement.

A ce propos, on observera que, lorsqu'il s'agit d'épandre un tel produit de déneigement, il est usuel de faire appel à un véhicule d'épandage comportant un châssis recevant un dispositif d'épandage.

Un tel dispositif d'épandage comporte un dispositif d'extraction constitué, d'une part, par un moyen pour stocker le produit à épandre, notamment sous la forme d'une trémie ou analogue, et, d'autre part, par un moyen pour acheminer le produit à extraire hors de ce moyen de stockage, un tel moyen d'acheminement adoptant notamment la forme d'un convoyeur ou analogue implanté dans le fond du moyen de stockage.

Ce dispositif d'épandage comporte, encore, un moyen pour épandre le produit de déneigement et adoptant, usuellement, la forme d'une toupie ou analogue. Ce moyen d'épandage est alimenté en produit de déneigement par le moyen d'acheminement susmentionné, voire encore en eau pour la réalisation, avec ce produit de déneigement, d'une saumure à épandre.

A ce propos, il convient d'observer que ce produit de déneigement, lorsqu'il arrive à l'extrémité aval du moyen d'acheminement, tombe de ce dernier pour alimenter le moyen d'épandage.

En fait, ce produit de déneigement se présente sous forme de grains dont la taille présente une large distribution et qui, notamment sous l'effet de l'humidité, ont tendance à s'agglomérer de sorte qu'à l'extrémité aval du moyen d'acheminement, ce produit quitte ce moyen d'acheminement par tranches, voire par blocs entiers, pour alimenter le moyen d'épandage qui épand, alors, le produit de déneigement sous forme de paquets et non pas sous forme d'un flux continu comme il se doit.

On observera, également, que le moyen d'acheminement peut se présenter sous la forme d'un convoyeur comportant une pluralité de racleurs entraînés par des chaînes qui confèrent à ces racleurs un déplacement saccadé. Par voie de conséquence, le produit à extraire, d'une part, est acheminé par le moyen d'acheminement, d'autre part, quitte ce moyen d'acheminement (notamment par tranches, voire par blocs entiers) et, d'autre part encore, alimente le moyen d'épandage, également, de manière saccadée. Ce phénomène est, bien entendu, accentué lorsque les grains du produit de déneigement s'agglomèrent comme il est décrit ci-dessus.

La présente invention se veut à même de remédier aux inconvénients des dispositifs de l'état de la technique.

A cet effet, l'invention concerne un dispositif d'épandage d'un produit de déneigement comportant un dispositif d'extraction de ce produit de déneigement comportant :
- un moyen pour stocker le produit à extraire ;
- un moyen pour acheminer le produit à extraire hors du moyen de stockage et présentant, conformément à la direction d'acheminement du produit et dans le sens d'acheminement de ce produit, une partie aval, située à l'extérieur du moyen de stockage, et présentant une zone au niveau de laquelle ce produit quitte le moyen d'acheminement ;
- à l'avant de cette zone de la partie aval du moyen d'acheminement et dans le sens d'acheminement du produit, un moyen pour conférer au produit à extraire et provenant du moyen d'acheminement, un écoulement dont le flux est homogène et continu.

Ce dispositif d'épandage est caractérisé par le fait que le moyen pour conférer au produit un flux homogène et continu est constitué par une plaque comportant, d'une part, une première portion située au débouché du moyen d'acheminement et orientée en direction de ce moyen d'acheminement et, d'autre part, une seconde portion, s'étendant à partir de cette première portion, se situant dans le prolongement de cette première portion, et pourvue d'une découpe s'étendant sur une partie au moins de la longueur de cette seconde portion.

En fait, cette plaque présente des caractéristiques techniques choisies en fonction des caractéristiques du produit à extraire et/ou des caractéristiques du moyen d'acheminement.

Selon une caractéristique additionnelle, la plaque est positionnée à une distance de l'extrémité distale de la partie aval du moyen d'acheminement, cette distance étant une fonction croissante de la granulométrie et une fonction décroissante de la fluidité du produit à extraire.

Une caractéristique additionnelle concerne le fait que la plaque est positionnée à une distance de la surface supérieure d'un panneau, d'une part, que comporte le moyen d'acheminement et, d'autre part, sur laquelle repose et par rapport à laquelle se déplace le produit à extraire, ceci en dessous et/ou au dessus du niveau de cette surface, cette distance étant une fonction croissante de la granulométrie et une fonction décroissante de la fluidité du produit à extraire.

Encore une autre caractéristique consiste en ce que la plaque s'étend dans une direction faisant, avec une direction d'acheminement du produit au sein du moyen d'acheminement et dans le sens d'acheminement de ce produit, un angle d'inclinaison (α) compris entre -20 et +45°.

De plus, le dispositif d'extraction comporte des moyens de réglage, selon le cas, de la distance entre la plaque et le moyen d'acheminement ou de l'angle d'inclinaison (α) de la plaque.

Les avantages de la présente invention consistent en ce que le produit à extraire s'écoule hors du dispositif d'extraction en présentant un écoulement dont le flux est homogène et continu.

Ceci permet, avantageusement, d'alimenter, de manière homogène et continue, en produit extrait un moyen d'épandage qui, lui-même, va épandre le produit extrait de manière homogène et continue.

Un autre avantage consiste en ce que la plaque présente des caractéristiques techniques qui sont adaptées aux caractéristiques du produit à extraire et/ou du moyen d'acheminement.

A ce propos, on observera que cette plaque présente des caractéristiques différentes selon que le moyen d'acheminement est constitué par un convoyeur à racleurs (assurant une extraction de manière saccadée), à bande (autorisant une extraction de manière continue) ou autre.

Cette plaque est de type amovible ce qui permet, avantageusement, de procéder à son remplacement par une autre plaque présentant des caractéristiques différentes et mieux adaptées aux caractéristiques du produit à extraire.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée, en coupe partielle et de côté d'un dispositif d'épandage comportant un dispositif d'extraction conforme à l'invention;
- la figure 2 est une vue schématisée, en détail et en coupe selon II-II du dispositif d'extraction illustré figure 1;
- la figure 3 est une vue schématisée et de dessus du moyen pour conférer au produit à extraire un flux homogène et continu;
- la figure 4 est une vue schématisée, de côté et en coupe partielle selon IV-IV du moyen illustré figure 3.

La présente invention concerne le domaine de la fabrication des équipements conçus pour assurer l'extraction d'un produit stocké.

Dans la suite de la description il sera, plus particulièrement, fait référence à un dispositif conçu pour assurer l'extraction d'un produit constitué par un produit de déneigement, comme par exemple du sel de déneigement.

Ceci constitue, en fait, un mode de réalisation préféré de l'invention sachant que celle-ci n'y est aucunement limitée et que le dispositif d'extraction, conforme à cette invention, trouvera, également, une application lorsqu'il s'agit d'extraire un produit granuleux ou pulvérulent, notamment de type alimentaire (comme par exemple de la farine) ou de type agricole (comme par exemple de l'engrais).

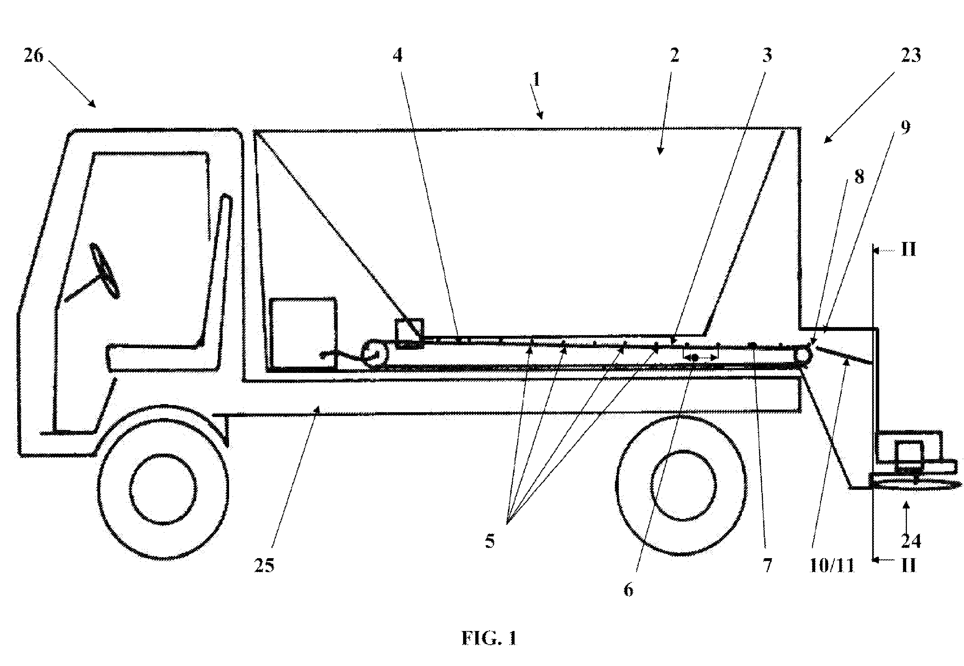

Tel que visible figure 1, l'invention concerne un dispositif d'extraction 1 comportant, d'une part, un moyen 2 pour stocker le produit à épandre, un tel moyen de stockage 2 adoptant, usuellement, la forme d'une trémie ou analogue.

D'autre part, ce dispositif d'extraction 1 comporte un moyen 3 pour acheminer le produit à extraire hors de ce moyen de stockage 2.

A ce propos, on observera que ce moyen d'acheminement 3 est implanté au niveau du fond 4 du moyen de stockage 2, s'étend sur une partie au moins de ce fond 4 (voire et de préférence sur l'intégralité de ce fond 4) et comporte des moyens 5 conçus pour entraîner le produit à extraire.

De tels moyens d'entraînement 5 peuvent adopter la forme d'une vis d'Archimède (non représentée) ou celle d'une bande que comporte un convoyeur à bande (non représenté).

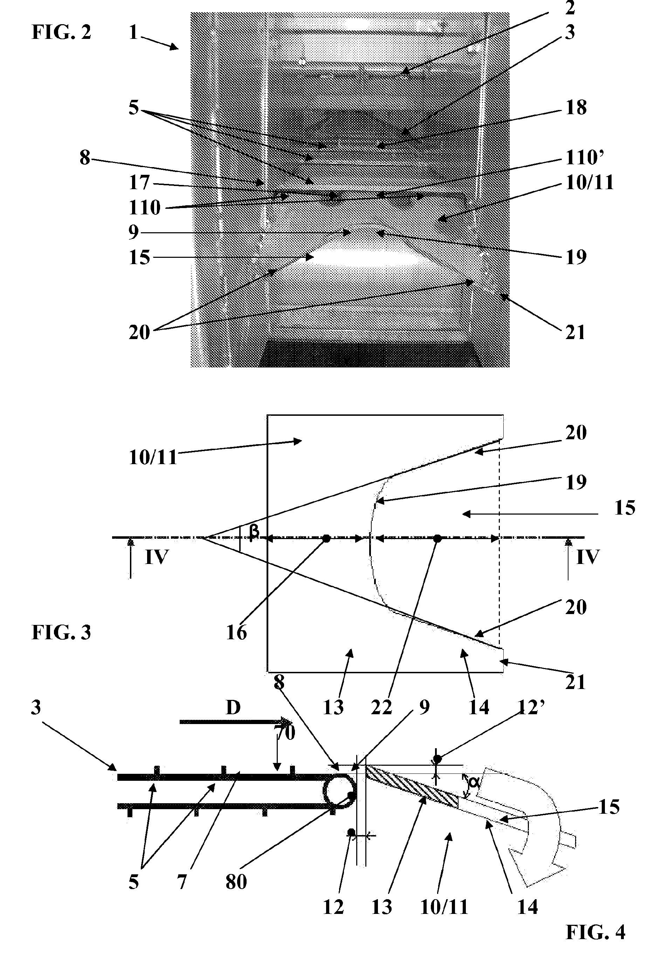

Cependant et selon un mode de réalisation préféré de l'invention illustré figures 1 et 2, les moyens d'entraînement 5 que comporte ce moyen d'acheminement 3 sont constitués par une pluralité de racleurs, de chevrons, de lames ou analogue.

De tels moyens d'entraînement 5 s'étendent dans une direction sensiblement perpendiculaire à celle D d'acheminement du produit à extraire et présentent, entre deux moyens d'entraînement 5 successifs, un espacement 6 déterminé, notamment régulier.

A ce propos, on observera que cet espacement 6 correspond, de préférence, à la distance séparant le bord avant d'un moyen d'entraînement 5 du bord avant d'un autre moyen d'entraînement 5 lui succédant immédiatement au niveau du moyen d'acheminement 3.

Dans un pareil cas, le moyen d'acheminement 3 comporte encore, d'une part, un panneau 7 par-dessus lequel viennent se positionner les moyens d'entraînement 5 et, d'autre part, des chaînes, associées aux extrémités latérales de ces moyens d'entraînement 5, et conçues pour assurer le déplacement de ces derniers 5 par rapport audit panneau 7.

Finalement, ce moyen d'acheminement 3 présente, conformément à la direction D d'acheminement du produit à extraire et dans le sens d'acheminement de ce produit, une partie aval 8, située à l'extérieur du moyen de stockage 2, et présentant une zone 9 au niveau de laquelle 9 ce produit quitte le moyen d'acheminement 3.

Selon l'invention, ce dispositif d'extraction 1 est complété, à l'avant de cette zone 9 de la partie aval 8 du moyen d'acheminement 3 et dans le sens d'acheminement du produit, par un moyen 10 pour conférer au produit à extraire et provenant du moyen d'acheminement 3, un écoulement dont le flux est homogène et continu.

En fait, le moyen 10 pour conférer au produit à extraire un flux homogène et continu est constitué par une plaque 11 présentant des caractéristiques techniques qui sont choisies en fonction des caractéristiques du produit à extraire et/ou des caractéristiques du moyen d'acheminement 3. On observera qu'une telle plaque 11 présente, alors, une géométrie adaptée et peut adopter, notamment, une forme générale sensiblement plane.

A ce propos et tel qu'il ressortira de la suite de la description, les caractéristiques de cette plaque 11 pourront être choisies en fonction des caractéristiques du produit à extraire, plus particulièrement en fonction de la fluidité, de la granulométrie, du degré d'humidité, de la capacité à faire des mottes, de la cohérence de ce produit ou autre.

Cependant, les caractéristiques de cette plaque 11 pourront, également, être choisies en fonction des caractéristiques du moyen d'acheminement 3, plus particulièrement en fonction de l'espacement 6 entre deux moyens d'entraînement 5 successifs, de la nature des moyens d'entraînement 5 (racleurs, lames, chevrons...), de la vitesse de déplacement de ces moyens d'entraînement 5 ou autre, comme il sera décrit ci-dessous.

Ainsi et selon une première caractéristique, cette plaque 11 est positionnée à une distance 12 de l'extrémité distale 80 de la partie aval 8 du moyen d'acheminement 3, ceci à l'arrière ou, et de préférence, à l'avant de cette extrémité distale 80.

A ce propos, on observera que cette distance 12 est, plus particulièrement, choisie en fonction de la granulométrie et/ou de la fluidité du produit à extraire.

Plus précisément, cette distance 12 est une fonction croissance de la granulométrie de ce produit. En effet, plus les grains du produit sont gros, plus la distance 12 est importante.

De plus, cette distance 12 est une fonction décroissance de la fluidité de ce produit. En effet, plus le produit est fluide, plus la distance 12 est faible.

Selon une deuxième caractéristique, cette plaque 11 est positionnée à une distance 12' (altitude) de la surface supérieure 70 du panneau 7 (sur laquelle repose et par rapport à laquelle se déplace le produit à extraire) du moyen d'acheminement 3, ceci en dessous et/ou au dessus du niveau de cette surface 70.

Un mode particulier de réalisation consiste en ce que cette plaque 11 présente, d'une part, au moins une partie 110 se situant en dessous et, d'autre part, au moins une autre partie 110' se situant au dessus du niveau de cette surface supérieure 70 du panneau 7.

Là encore, cette distance 12' est, plus particulièrement, choisie en fonction de la granulométrie et/ou de la fluidité du produit à extraire.

Plus précisément, cette distance 12' est une fonction croissance de la granulométrie de ce produit. En effet, plus les grains du produit sont gros, plus la distance 12' est importante.

De plus, cette distance 12' est une fonction décroissance de la fluidité de ce produit. En effet, plus le produit est fluide, plus la distance 12 est faible.

Une caractéristique additionnelle consiste en ce que le dispositif d'extraction 1 comporte des moyens de réglage des distances (12 ; 12') entre la plaque 11 et le moyen d'acheminement 3. Ces moyens de réglage permettent, avantageusement, d'adapter la position de la plaque 11 aux caractéristiques du produit à extraire.

Une autre caractéristique de cette plaque 11 consiste en ce qu'elle s'étend dans une direction faisant, avec la direction D d'acheminement du produit au sein du moyen d'acheminement 3 et dans le sens d'acheminement de ce produit, un angle d'inclinaison α compris entre -20 et +45°, conformément au sens trigonométrique.

A ce propos, on observera que l'angle d'inclinaison α de cette plaque 11 est choisi en fonction de la fluidité du produit à extraire.

En fait, cet angle d'inclinaison α est une fonction croissante de cette fluidité en sorte que, plus le produit à extraire est fluide, plus l'angle α est élevé.

Là encore, une caractéristique additionnelle du dispositif d'extraction 1 consiste en ce qu'il comporte des moyens de réglage de l'angle d'inclinaison de la plaque 11, ces moyens de réglage permettant, avantageusement, d'adapter l'inclinaison de la plaque 11 aux caractéristiques du produit à extraire.

Une autre caractéristique consiste en ce que cette plaque 11 est de type amovible, voire interchangeable. Ceci permet, avantageusement, de remplacer une telle plaque 11, soit en cas de détérioration ou d'usure, soit en vue de s'adapter aux caractéristiques d'un autre produit à extraire.

Selon une autre caractéristique de l'invention, ladite plaque 11 est réalisée en un matériau et/ou est revêtue d'un revêtement présentant une faible résistance au déplacement du produit à extraire.

Un tel mode de réalisation permet, avantageusement, d'une part, de limiter le collage du produit à extraire et, d'autre part, de faciliter le glissement de ce produit au niveau de la surface de cette plaque 11.

Tel qu'évoqué ci-dessus, le moyen d'acheminement 3 comporte des moyens 5 conçus pour entraîner le produit à extraire et adoptant, notamment, la forme de racleurs, de chevrons, de lames ou analogue. Au sein du dispositif d'extraction ces moyens d'entraînement 5 présentent, entre deux moyens d'entraînement 5 successifs, un espacement 6 déterminé.

Aussi et selon une caractéristique additionnelle, la plaque 11 présente une longueur qui est choisie en fonction de l'espacement 6 entre deux moyens d'entraînement successifs 5.

En fait, la longueur de cette plaque 11 est au moins égale à l'espacement 6 entre deux moyens d'entraînement successifs 5.

Tel que visible sur les figures 3 et 4, la plaque 11 comporte une première portion 13 située au débouché du moyen d'acheminement 3 et orientée en direction de ce moyen d'acheminement 3.

Cette plaque 11 comporte, encore, une seconde portion 14, s'étendant à partir de cette première portion 13, et se situant dans le prolongement de cette première portion 13. Cette seconde portion 14 est orientée dans une direction opposée à celle du moyen d'acheminement 3 et se situe en aval de la première portion 13 de la plaque 11, ceci conformément à la direction (D) d'acheminement du produit et dans le sens d'acheminement de ce produit.

Cette seconde portion 14 de la plaque 11 est pourvue d'une découpe 15 s'étendant sur une partie au moins de la longueur de cette seconde portion 14 de plaque 11.

A ce propos et selon une autre caractéristique de cette plaque 11, la première portion 13 de cette plaque 11 constitue une zone tampon au niveau de laquelle s'accumule le produit à extraire dans l'attente de quitter la plaque 11 au niveau de la seconde portion 14 de cette plaque 11, plus particulièrement au niveau de la découpe 15 que présente cette seconde portion 14.

En fait, cette zone tampon présente une longueur 16, là encore, choisie en fonction de la fluidité du produit à extraire. Plus particulièrement, cette longueur 16 est une fonction croissante de cette fluidité. En effet, plus le produit à extraire est fluide, plus cette longueur 16 est importante.

Une autre caractéristique visible sur la figure 2 consiste en ce que la première portion 13 de la plaque 11 comporte au moins une ouverture 17 s'étendant, d'une part, à partir du bord de cette première portion 13 orienté en direction des moyens d'acheminement 3 et, d'autre part, en direction de la seconde portion 14 de cette plaque 11.

Une telle ouverture 17 est définie pour autoriser le passage d'un organe 18 (usuellement dénommé scrapper et adoptant, notamment, la forme d'une griffe ou analogue) que comporte un moyen d'entraînement 5 et qui est conçu pour déstructurer un (éventuel) agglomérat de produit à extraire.

En ce qui concerne la deuxième portion 14 de la plaque 11, celle-ci 14 présente une découpe 15 comportant, d'une part, un fond 19 adoptant une forme en arc de cercle ou en demi ellipse et, d'autre part, des bords 20 s'étendant à partir de ce fond 19, en divergeant et en direction de l'extrémité libre 21 de cette deuxième portion 14 de plaque 11.

A ce propos, on observera que l'arc de cercle, respectivement la demi ellipse, du fond 19 de la découpe 15 présentent un rayon, respectivement un grand axe et un petit axe, choisis en fonction de la fluidité du produit à extraire.

En fait, le rayon de l'arc de cercle (voire le grand axe de la demi ellipse) sont des fonctions croissantes de cette fluidité tandis que le petit axe de cette demi ellipse est une fonction décroissante de cette fluidité.

En effet, plus le produit à extraire est fluide:
- plus le rayon de l'arc de cercle est grand (voire jusqu'à devenir infini pour un fond 19 plat) et/ou le grand axe est long;
- plus le petit axe est petit (voire jusqu'à devenir nul pour un fond 19 plat).

Une autre caractéristique consiste en ce que les bords 20 de la découpe 15 forment un angle β choisi en fonction de la fluidité du produit à extraire.

En fait, cet angle β est une fonction croissante de la fluidité du produit. En effet, plus le produit à extraire est fluide, plus l'angle β est ouvert.

Tel que visible sur les figures en annexe, ladite découpe 15 s'étend à partir de l'extrémité libre 21 de la deuxième portion 14 de plaque 11, ceci sur une profondeur 22.

A ce propos, on observera que cette profondeur 22 est choisie en fonction de l'espacement 6 entre deux moyens d'entraînement successifs 5.

Plus particulièrement, la profondeur 22 de cette découpe 15 est au moins égale à un tel espacement 6.

Finalement, l'invention concerne un dispositif d'épandage 23 d'un produit de déneigement (plus particulièrement un sel de déneigement) et comportant un dispositif d'extraction 1 présentant les caractéristiques décrites ci-dessus.

Ce dispositif d'épandage 23 comporte, encore, un moyen d'épandage 24 conçu pour assurer l'épandage d'un produit extrait d'un tel dispositif d'extraction 1.

Ce moyen d'épandage 24 adopte, usuellement, la forme d'une toupie ou analogue et est alimenté en produit extrait du dispositif d'extraction 1 (voire encore en eau et/ou en saumure, plus particulièrement pour la réalisation d'une saumure lorsque ce produit est constitué par un sel de déneigement).

En fait et tel que visible figure 1, un tel dispositif d'épandage 23 peut être implanté sur un châssis 25 que comporte un véhicule d'épandage 26.

## Revendications

1. Dispositif d'épandage (23) d'un produit de déneigement comportant un dispositif d'extraction (1) de ce produit de déneigement comportant :
- un moyen (2) pour stocker le produit à extraire ;
- un moyen (3) pour acheminer le produit à extraire hors du moyen (2) de stockage et présentant, conformément à la direction (D) d'acheminement du produit et dans le sens d'acheminement de ce produit, une partie aval (8), située à l'extérieur du moyen (2) de stockage, et présentant une zone (9) au niveau de laquelle ce produit quitte le moyen d'acheminement (3) ;
- à l'avant de cette zone (9) de la partie aval (8) du moyen d'acheminement (3) et dans le sens d'acheminement du produit, un moyen (10) pour conférer au produit à extraire et provenant du moyen d'acheminement (3), un écoulement dont le flux est homogène et continu ;
- **caractérisé par le fait que** le moyen (10) pour conférer au produit un flux homogène et continu est constitué par une plaque (11) comportant :
- une première portion (13) située au débouché du moyen d'acheminement (3) et orientée en direction de ce moyen d'acheminement (3) ;
- une seconde portion (14), s'étendant à partir de cette première portion (13), se situant dans le prolongement de cette première portion (13), et pourvue d'une découpe (15) s'étendant sur une partie au moins de la longueur de cette seconde portion (14).

2. Dispositif d'épandage (23) selon la revendication 1, **caractérisé par le fait que** la plaque (11) est de forme générale sensiblement plane.

3. Dispositif d'épandage (23) selon l'une quelconque des revendications précédentes, **caractérisé par le fait que** la plaque (11) est positionnée à une distance (12) de l'extrémité distale (80) de la partie aval (8) du moyen d'acheminement (3), cette distance (12) étant une fonction croissante de la granulométrie et une fonction décroissante de la fluidité du produit à extraire.

4. Dispositif d'épandage (23) selon l'une quelconque des revendications précédentes, **caractérisé par le fait que** la plaque (11) est positionnée à une distance (12') de la surface supérieure (70) d'un panneau (7), d'une part, que comporte le moyen d'acheminement (3) et, d'autre part, sur laquelle repose et par rapport à laquelle se déplace le produit à extraire, ceci en dessous et/ou au dessus du niveau de cette surface (70), cette distance (12') étant une fonction croissante de la granulométrie et une fonction décroissante de la fluidité du produit à extraire.

5. Dispositif d'épandage (23) selon l'une quelconque des revendications précédentes, **caractérisé par le fait que** la plaque (11) s'étend dans une direction faisant, avec une direction (D) d'acheminement du produit au sein du moyen d'acheminement (3) et dans le sens d'acheminement de ce produit, un angle d'inclinaison (α) compris entre -20 et +45°.

6. Dispositif d'épandage (23) selon l'une quelconque des revendications 3 à 5, **caractérisé par le fait que** le dispositif d'extraction (1) comporte des moyens de réglage, selon le cas, de la distance (12 ; 12') entre la plaque (11) et le moyen d'acheminement (3) ou de l'angle d'inclinaison (α) de la plaque (11).

7. Dispositif d'épandage (23) selon l'une quelconque des revendications précédentes, **caractérisé par le fait que** la plaque (11) est de type amovible, voire interchangeable.

8. Dispositif d'épandage (23) selon l'une quelconque des revendications précédentes, **caractérisé par le fait que** la plaque (11) est réalisée en un matériau et/ou est revêtue d'un revêtement présentant une faible résistance au déplacement du produit.

9. Dispositif d'épandage (23) selon l'une quelconque des revendications précédentes, **caractérisé par le fait que** le moyen d'acheminement (3) comporte des moyens (5), notamment sous forme de racleurs, de lames ou analogue, d'une part, conçus pour entraîner le produit à extraire et, d'autre part, présentant un espacement (6) déterminé entre deux moyens (5) d'entraînement successifs, tandis que la longueur de la plaque (11) est au moins égale à l'espacement (6) entre deux moyens d'entraînement successifs (5).

10. Dispositif d'épandage (23) selon l'une quelconque des revendications précédentes, **caractérisé par le fait que** la première portion (13) de la plaque (11) constitue une zone tampon et présente une longueur qui est une fonction croissante de la fluidité du produit à extraire.

11. Dispositif d'épandage (23) selon l'une quelconque des revendications précédentes, **caractérisé par le fait que** la deuxième portion (14) de la plaque (11) présente une découpe (15) comportant, d'une part, un fond (19) adoptant une forme en arc de cercle ou en demi ellipse et, d'autre part, des bords (20) s'étendant à partir de ce fond (19), en divergeant et en direction de l'extrémité libre (21) de cette deuxième portion (14) de plaque (11).

12. Dispositif d'épandage (23) selon la revendication 11, **caractérisé par le fait que** le rayon de l'arc de cercle et le grand axe de la demi ellipse, respectivement le petit axe de cette demi ellipse, sont des fonctions croissantes, respectivement décroissantes, de la fluidité du produit à extraire.

13. Dispositif d'épandage (23) selon l'une quelconque des revendications 11 ou 12, **caractérisé par le fait que** les bords (20) de la découpe (15) forment un angle (β) qui est une fonction croissante de la fluidité du produit à extraire.

14. Dispositif d'épandage (23) selon l'une quelconque des revendications précédentes, **caractérisé par le fait que** le moyen d'acheminement (3) comporte des moyens (5), notamment sous forme de racleurs, de lames ou analogue, d'une part, conçus pour entraîner le produit à extraire et, d'autre part, présentant un espacement (6) déterminé entre deux moyens (5) d'entraînement successifs, tandis que la découpe (15) s'étend à partir de l'extrémité libre (21) de la deuxième portion (14) de la plaque (11), ceci sur une profondeur (22) qui est au moins égale à l'espacement (6) entre deux moyens (5) d'entraînement successifs.
